# EUROPÄISCHE PATENTSCHRIFT

(11) **EP 1 415 411 B1**
(45) Veröffentlichungstag und Bekanntmachung des Hinweises auf die Patenterteilung: **02.09.2009**
(21) Anmeldenummer: 02753001.3
(22) Anmeldetag: 09.07.2002
(51) Int. Cl.: H04B 7/005

(54) **VERFAHREN, VORRICHTUNGEN UND COMPUTERPROGRAMMPRODUKTE ZUR ANPASSUNG DER UPLINKSIGNALISIERUNG BEIM MULTICASTING**
METHODS, DEVICES AND COMPUTER PROGRAM PRODUCTS FOR ADAPTING UPLINK SIGNALING DURING MULTICASTING
PROCEDE, DISPOSITIFS ET PRODUIT-PROGRAMME INFORMATIQUE POUR ADAPTER LA SIGNALISATION DANS LA LIAISON MONTANTE LORS DE LA MULTI-DIFFUSION

(30) Priorität: 07.08.2001 DE 10138767; 06.11.2001 DE 10154428
(43) Veröffentlichungstag der Anmeldung: 06.05.2004
(73) Patentinhaber: SIEMENS AKTIENGESELLSCHAFT, 80333 München (DE)
(72) Erfinder: ECKERT, Michael, 38122 Braunschweig (DE); GOTTSCHALK, Thomas, 12524 Berlin (DE); HANS, Martin, 31162 Bad Salzdetfurth/ Heinde (DE); SCHWAGMANN, Norbert, 26892 Lehe (DE); BECKMANN, Mark, 38124 Braunschweig (DE); CHOI, Hyung,Nam, 22117 Hamburg (DE); KO, Clyde, Miin-Arng, Ada, MI 49301 (US)
(86) Internationale Anmeldenummer: PCT/DE2002/002512
(87) Internationale Veröffentlichungsnummer: WO 2003/017523

(56) Entgegenhaltungen:
- EP-A- 1 063 782
- LOF C-G: "Power control in cellular radio systems with multicast traffic" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8. September 1998 (1998-09-08), Seiten 910-914, XP010314524 ISBN: 0-7803-4872-9

## Beschreibung

Die Erfindung betrifft Verfahren, Vorrichtungen und Computer programmprodukte zur Anpassung der Uplinksignalisierung beim Multicasting.

Bei vielen in modernen Mobilfunksystemen angebotenen Diensten und Anwendungen sollen Nachrichten nicht nur zu einem, sondern zu zwei und mehreren Mobilfunkteilnehmern übertragen werden. Beispiele für solche Dienste und Anwendungen sind News-Groups, Video-Konferenzen, Video-On-Demand, verteilte Anwendungen usw.. Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über N (N=Anzahl der Empfänger der Nachricht) Einzelverbindungen (Unicast-Verbindungen) übertragen wird und dabei mehrfach über gemeinsame Verbindungswege gesendet wird, benötigt dieses Verfahren eine sehr hohe Bandbreite.

Eine bessere Möglichkeit bietet hier die Multicast-Übertragung. Hierbei werden die verschiedenen Teilnehmer, denen dieselbe Nachricht übermittelt werden soll, zu einer Gruppe (Multicast-Gruppe) zusammengefaßt, der eine Adresse (Multicast-Adresse) zugeordnet wird (Point-to-Multipoint-Übertragung). Die zu übertragenden Daten werden daraufhin nur einmal an diese Multicast-Adresse gesendet. Über gemeinsame Verbindungswege vom Sender zu den Empfängern wird die Multicast-Nachricht im Idealfall nur einmal gesendet. Der Sender muß hierbei nicht wissen, wo und wie viele Empfänger sich hinter der Multicast Adresse verbergen.

Innerhalb von UMTS (Universal Mobile Telecommunication System) ist bisher keine Multicast-Übertragung spezifiziert. Beim Mobilfunksystem UMTS erfolgt die Übertragung von Informationen zu einem Anwender durch Reservierung einer physikalischen Ressource. Bei der Übertragung von Daten - egal welcher Art - wird im Mobilfunk zwischen zwei Übertragungsrichtungen unterschieden. Allgemein wird die Daten-Übertragung von der i.a. ortsfesten Basisstation (Bezeichnung im GSM - Global System for Mobile Communications) bzw. NodeB (Bezeichnung im UMTS) zu den mobilen Endgeräten als Übertragung in Downlink-Richtung DL (Abwärtsstrecke) bezeichnet, bei der Datenübertragung in der Gegenrichtung von einem Endgerät zu der Basisstation spricht man von Übertragung in Uplink-Richtung UL (Aufwärtsstrecke). Bei UMTS sind für die Übertragung über die Luftschnittstelle zwei Modi vorgesehen: Beim FDD-Mode erfolgt die Übertragung in Up- und Downlink auf unterschiedlichen Frequenzen, beim TDD-Mode wird nur eine Trägerfrequenz verwendet. Durch Zuweisung von Zeitschlitzen erfolgt eine Trennung der Up- und Downlink-Richtung. Die Teilnehmer werden bei beiden Modi durch Aufprägen orthogonaler Codes (Channelization Codes) auf die Informationsdaten getrennt. Dieses Mehrfachzugriffsverfahren ist als CDMA-Verfahren bekannt. Gemäß den aktuellen Spezifikationen (u.a. siehe TS 25.211 V4.0.0: Physical channels and mapping of transport channels onto physical channels, 3GPP-TSG-RAN, 2001-3 und TS 25.212 V4.0.0: Multiplexing and channel coding, 3GPP-TSG-RAN, 2001-3) des UMTS-FDD Mode ist ein physikalischer Kanal, d.h. ein Funkkanal, in der Downlink-Richtung definiert durch Trägerfrequenz, Scrambling Code, Channelization Code und einer Start- und Stopzeit. Die Scrambling Codes dienen zur Verwürfelung der bereits gespreizten Daten. Dadurch sollen u.a. die Störungen (Interferenzen) in Nachbarzellen minimiert werden.

In UMTS gibt es für die Übertragung von Informationen zwei Arten von Funkkanälen: Dedizierte Kanäle (Dedicated Channels) und gemeinsame Kanäle (Common Channels). Bei den dedizierten Kanälen wird eine physikalische Ressource nur für die Übertragung von Informationen für ein bestimmtes Teilnehmergerät (User Equipment) reserviert. Bei den gemeinsamen Kanälen können Informationen übertragen werden, die für alle Teilnehmer gedacht sind (z.B. der Broadcast Channel BCH) oder nur für einen bestimmten Teilnehmer. Im letzteren Fall muß auf dem gemeinsamen Kanal noch mitübertragen werden, für welchen Teilnehmer die Information gedacht ist.

Stand der Technik ist ebenfalls die SIR-basierte (Signal-to-Interference-Ratio) Leistungsregelung mit geschlossener Regelschleife, welche nachfolgend kurz skizziert wird (s.a. TS 25.214 V4.0.0: Physical layer procedures, 3GPP-TSG-RAN, 2001-3). Das Mobilfunkgerät macht für die dedizierten Kanäle, die sie empfängt, eine Schätzung des SIR. Dieser Wert stellt ein Qualitätskriterium für das empfangene Signal dar. Durch Vergleich mit einem vorgegebenen Wert SIR_{target} wird ein TPC-Befehl (Transmission Power Control), d.h. ein Leistungsübertragungskontroll-Befehl, erzeugt und das Ergebnis über einen Uplink-Kanal an die Basisstation gesendet. Der Wert für SIR_{target} wird dabei vom Netz für jede Mobilstationen individuell so vorgegeben, daß für die jeweilige Verbindung eine ausreichende Qualität gewährleistet wird. Die TPC-Befehle sind reine 1-bit Informationen und stellen lediglich die Information dar, ob das gemessene SIR unter- oder überhalb des vorgegeben Wert SIR_{target} liegt. Deshalb können die TPC-Befehle auch mit den Kommandos "UP" (SIR unterhalb SIR_{target}) und "DOWN" (SIR überhalb SIR_{target}) gleichgesetzt werden. Der Befehl "UP" bedeutet, daß die Empfangsqualität nicht ausreicht und deshalb am Sender eine Erhöhung der Sendeleistung notwendig ist. Umgekehrtes gilt für den "DOWN"-Befehl.

Gruppen- bzw. Multicast-Nachrichten werden i.a. über dedizierte Kanäle von den in den Funkzellen angeordneten Basisstationen bzw. NodeBs zu den Teilnehmergeräten (Mobilfunkstationen bzw. Mobile Stations im GSM, User Equipments UEs im UMTS; angehängtes "s" wird zur Pluralbildung verwendet) der Multicast-Gruppe versendet. Um diese Nachrichtenübertragung leistungsmäßig anzupassen bzw. in ausreichender und nicht zu hoher Leistung zu senden, steht ein assoziierter Uplink-Kanal pro Teilnehmergerät zur Verfügung, der der Basisstation mittels TPC-Bits (Leistungsübertragungsbits) mitteilt, daß die Sendeleistung für das jeweilige Teilnehmergerät zu hoch oder zu niedrig ist. Der Uplink-dedizierte Kanal UL-DCH, der die TPC-Bits überträgt, wird sinnvollerweise ebenfalls leistungsgeregelt, damit in der Mobilfunkzelle die Störungen durch die UL-Übertragung durch mehrere Teilnehmergeräte so gering wie möglich gehalten werden. Diese Kontrolle erfolgt bekanntermaßen wiederum durch einen zum UL-Kanal assoziierten dedizierten DL-Kanal. Im UMTS wird hierbei jedem Teilnehmergerät ein assoziierter DL-Kanal zugeordnet. Nachteiligerweise werden hierdurch Systemresourcen hinsichtlich Spreizungscodes belegt.

In der europäischen Patentanmeldung EP 1 063 782 A2 wird eine Multicast message communication und eine power control method / Leistungssteuerungsverfahren beschrieben. Ein Multicast Message Communication System umfasst eine Basisstation und eine Vielzahl von Mobilstationen. Die Basisstation sendet über einen Multicast-Kanal eine Multicast Nachricht, die von den Mobilstationen empfangen werden. Die Basisstation hat eine Empfangseinrichtung zum Empfang von Leistungserhöhungsanforderungen der Mobilstationen, die diese in Abhängigkeit von der Empfangsleistung der Multicast-Nachricht aussenden.

Es ist Aufgabe der vorliegenden Erfindung, eine systemressourcensparende Leistungsanpassung bei der Übertragung von Multicast- bzw. Gruppennachrichten zur Verfügung zu stellen.

Diese Aufgabe wird hinsichtlich des Verfahrens durch die Merkmale des Anspruchs 1 und des Anspruchs 14, hinsichtlich der Vorrichtungen durch die Merkmale der Ansprüche 13 und 15 sowie hinsichtlich des Computerprogrammproduktes durch die Merkmale des Anspruches 16 gelöst.

Der Vorteil der vorliegenden Erfindung besteht insbesondere darin, daß in der Downlink-Richtung mit nur geringen Systemresourcenaufwand eine Kontrolle der Uplinkleistungsanpassung für die einer Multicastgruppe angehörenden bzw. eingeschriebenen Teilnehmer realisiert werden kann. Somit kann anstelle eines Kanals pro Teilnehmer (wie im Stand der Technik) bevorzugt ein einziger zielgerichteter dedizierter Kanal im Downlink zur Uplinkleistungskontrolle pro Multicast-Gruppe aufgebaut werden. Bevorzugt werden hierzu TPC-Bits verwendet.

Durch die erfindungsgemäße Einführung und Verwendung eines sogenannten Physical-Multicast-Power-Channels PMcPCH (der Name ist frei gewählt und enthält keine Einschränkung) können die pro Teilnehmergerät zur Uplinkleistungsregelung verwendeten TPC-Bits komplett pro Multicastgruppe in einem DL-Burst gesendet werden. Die TPC-Bits brauchen nicht wie bisher in jeweils einem einzelnen DL-Burst an jedes Teilnehmergerät gesendet zu werden. Der Vorteil liegt daher in der Einsparung von Systemresourcen durch Einsparung von DL-Kanälen und Spreizungscodes zur Uplinkleistungsanpassung.

Weitere vorteilhafte Weiterbildungen der Erfindung sind durch die Merkmale der Unteranprüche gekennzeichnet.

Im folgenden werden verschiedene Ausführungsbeispiele der Erfindung anhand der Figuren näher erläutert. Es zeigen:
- Fig. 1: das bekannte Schichtenmodell der Protokolle auf der Luftschnittstelle in UMTS;
- Fig. 2: eine Signalverarbeitung in einer Netzwerkkontrolleinheit zur Übertragung einer MulticastNachricht;
- Fig. 3: die Struktur eines möglichen Bursts zur Übertragung einer Multicast-Nachricht im Downlink;
- Fig. 4: die bekannte Struktur eines Bursts auf dem Kanal DPCCH zur Leistungsanpassung im Uplink;
- Fig. 5: ein Schichtenmodell der Protokolle auf der Luftschnittstelle in UMTS mit einer erfindungsgemäßen Leistungsanpassung des Kanals DPCCH im Downlink;
- Fig. 6: ein erstes Ausführungsbeispiel eines Bursts auf dem erfindungsgemäßen Kanal PMcPCH im Downlink;
- Fig. 7: ein zweites Ausführungsbeispiel eines Bursts auf dem erfindungsgemäßen Kanal PMcPCH im Downlink;
- Fig. 8: eine Mobilfunkzelle mit mehreren Mobilfunkstationen, und
- Fig. 9: ein Beispiel eines Aufbaus eines DL-Bursts gemäß der Fig. 6 und 8.

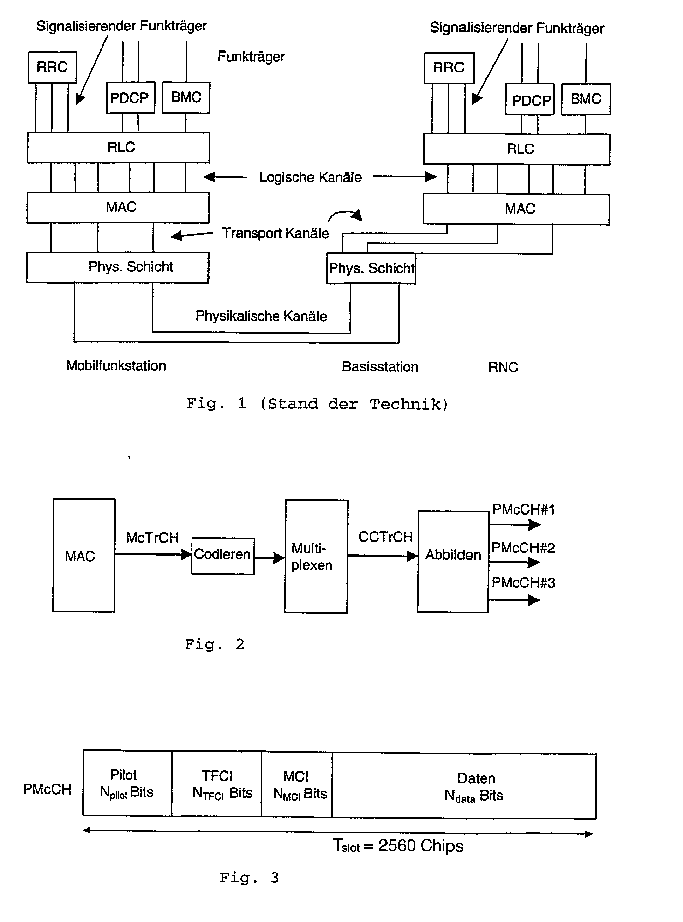

Das Schichtenmodell der Protokolle auf der Luftschnittstelle in UMTS gemäß dem Stand der Technik ist in Fig. 1 dargestellt. Die Mobilfunkstation besteht aus einer Physikalischen Schicht (Physical Layer 1 bzw. Layer 1), die senderseitig für die Verarbeitung der Daten zur Übertragung über die Luftschnittstelle über physikalische Kanäle verantwortlich ist und empfangsseitig die empfangenen Daten derart an die darüber liegende Medienzugangskontrollschicht (Medium Access Control MAC) weitergibt, daß sie von dieser Schicht weiterverarbeitet werden können. Die Verbindungen zwischen der Physikalischen Schicht und dem MAC werden Transport Kanäle genannt. Neben der MAC Schicht gehören zur sog. Sicherungsschicht die sog. Funkverbindungskontrollschicht (Radio Link Control RLC), das Packetdatenkonvergenzprotokoll (Packet Data Convergence Protocol PDCP) und die Broadcast/Multicast Control BMC). Die Funkresourcenkontrolle (Radio Resource Control RRC) ist Teil der Vermittlungsschicht. Die Verbindungen zwischen der MAC Schicht und der RLC Schicht werden Logische Kanäle genannt. Aufgabe und Funktion dieser Schichten sind in den jeweiligen bekannten Spezifikationen ausgeführt und vorliegend nicht von tieferem Interesses.

Der Aufbau der Netzwerkseite ist prinzipiell ähnlich demjenigen der Basisstation. Die physikalische Schicht befindet sich in der Basisstation, welche über eine Festnetzverbindung mit der Funknetzwerkkontrolleinheit (Radio Network Controler RNC) verbunden ist. Die Transport Kanäle zwischen der physikalischen Schicht und der MAC Schicht geben an, wie die Daten übertragen werden, beispielsweise auf gemeinsamen Kanälen bzw. Common Channels oder auf dedizierten Kanälen bzw. Dedicated Channels, die lediglich einer bestimmten Mobilfunkstation gewidmet sind. Die MAC Schicht identifiziert z.B. die Nutzer, für die ein Paket bestimmt ist, falls dieses Paket auf gemeinsamen Kanälen übertragen wird. Zudem übernimmt die MAC Schicht die Abbildung der Logischen Kanäle auf die Transport Kanäle. Dafür fügt die MAC Schicht senderseitig Kontrollinformationen, z.B. die Identität der Mobilfunkstation, zu den Paketen hinzu, die sie von der darüber liegenden RLC Schicht erhalten hat. Empfangsseitig werden diese Kontrollinformationen ausgewertet und wieder von den Paketen entfernt, bevor diese über die Logischen Kanäle an die RLC Schicht weitergeleitet werden.

In Fig. 2 ist eine Signalverarbeitung in einer Basisstation zur Vorbereitung des Versendens einer Multicast-Nachricht auf der Luftschnittstelle in UMTS dargestellt. Entsprechend den UMTS-Spezifikationen, z.B. TS 25.212 V4.0.0: Multiplexing and channel coding, 3GPP-TSG-RAN, 2001-3, wird im Downlink der Multicast-Transport-Kanal McTrCH für die entsprechende Multicastgruppe nach einer ersten Signalverarbeitung, insbesondere nach Codierung, auf einen sogenannten Coded Composite Transport Channel CCTrCH gemultiplext bzw. gemappt. Danach erfolgt nach dem Ausführungsbeispiel der Fig. 2 ein Mapping auf einen oder mehrere physikalische Multicast-Kanäle, die hier als DL-PMcCH#n bezeichnet sind. Die Anzahl n dieser Kanäle ist durch das Anhängen von #n symbolisiert. Gemäß dem Beispiel der Fig. 2 sind dies vorliegend drei DL-PMcCH#n. Dieser PMcCH ist in seinem Aufbau und in der Leistungsregelung ähnlich dem Downlink Shared Channel DSCH, der einen gemeinsamen Kanal darstellt, welcher zu einer bestimmten Zeit nur einem bestimmten Teilnehmergerät zugeordnet wird. Während dieser Zeit empfängt auch nur dieses eine Teilnehmergerät diesen Kanal PMcCH zur Übertragung von Nutzdaten.

Ein möglicher Aufbau eines solchen physikalischen Kanals DL-PMcCH ist in Fig. 3 dargestellt. Auf einen Pilotpart mit der Anzahl N Bits ("Nₚᵢₗₒₜ"), die dem Empfänger zur Kanalschätzung dienen, folgen N TFCI Bits (Transport Format Combination Indicator), die einen Index für mögliche Kombinationen von Transportformaten verschiedener Transportkanäle angeben, die ein Multiplexen auf einen CCTrCH zulassen. Eine solche Kombination wird Transport Format.Combination genannt. Im Burst der Fig. 3 schließen sich N MCI Bits (Multicast Indicator) an, die zur Identifizierung der Multicast-Services verwendet werden. Schließlich folgen in dem Burst die N Daten Bits.

Nach dem Mapping auf einen oder mehrere physikalische Kanäle - beispielsweise auf die in der Fig. 3 gezeigten oder auch andere dedizierte oder gemeinsame physikalische Kanäle - können weitere Maßnahmen zur Signalverarbeitung folgen, welche die sichere Übertragung der Informationen zum Ziele haben, z.B. nochmaliges Interleaving bzw. Bitverschachtelungen.

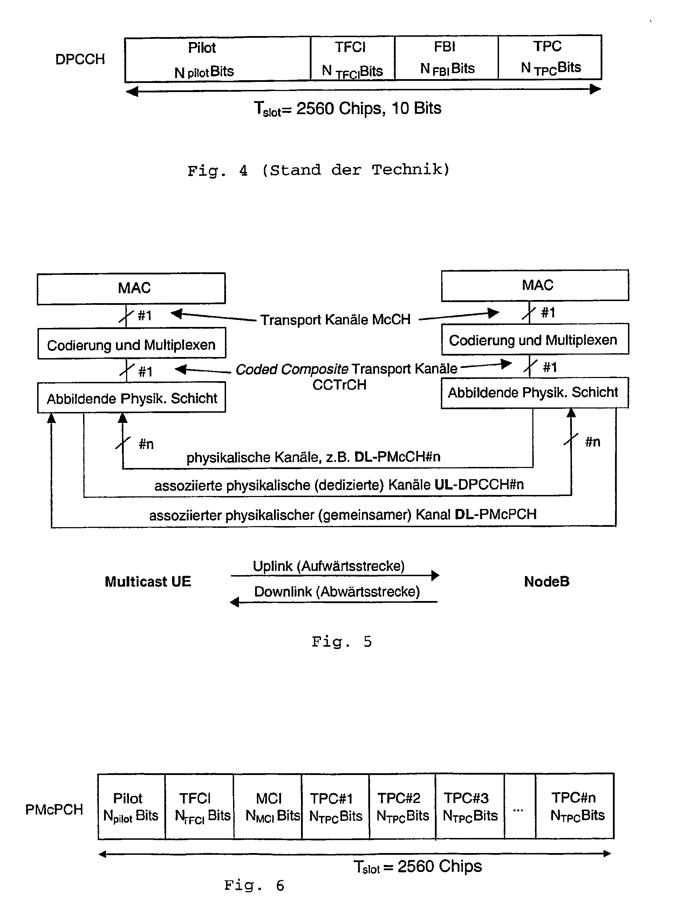

Die Multicastinformationen für eine Multicastgruppe werden demnach zu den Teilnehmergeräten, die sich zu dieser Multicastgruppe eingeschrieben haben, mittels einem oder mehreren physikalischen Kanälen übertragen, wobei die Datenmenge die Anzahl der physikalischen Kanäle bestimmt. Jedem empfangenden Teilnehmergerät dieser Multicastgruppe ist jeweils ein assoziierter dedizierter Uplink-Kanal DPCCH zugeordnet, um die Leistungsregelung für diese Multicast-Teilnehmergeräte in einer sogenannten geschlossenen Regelschleife (closed-loop) zu sichern. Fig. 4 zeigt einen Burst eines solchen bekannten UL-Kanal DPCCH, wobei sich dieser Burst zusammensetzt aus N Pilot Bits, N TFCI Bits, N FBI Bits (Feedback Information), die für Funktionen benötigt werden, die auf Schicht-1-Ebene eine Rückmeldung vom Teilnehmergerät UE zum UTRAN benötigen, sowie den N TPC Bits. Wenn also die Teilnehmergeräte feststellen, daß sie die Multicast-Informationen mit zuviel oder zuwenig Sendeleistung erhalten, dann werden mittels TPC-Bits der Basisstation bzw. dem NodeB die Forderung nach einer Leistungserhöhung oder Leistungserniedrigung signalisiert.

Damit diese assoziierten UL-Kanäle die Interferenzsituation in der Mobilfunkzelle nicht zu sehr beeinflussen, werden auch diese Kanäle leistungsgeregelt. Die Regelung dieser assoziierten UL-Kanäle erfolgt ebenfalls mittels TPC-Bits auf assoziierten DL-Kanälen. Hierbei wird entweder die Leistung herauf- oder heruntergeregelt. Erfindungsgemäß sind diese DL-Kanäle zur Übertragung der Regelinformationen für die Leistung der UL-Kanäle keine einzelnen dedizierten Kanäle, deren Anzahl der Anzahl zu versorgender Multicast-Teilnehmergeräte der jeweiligen Multicastgruppe entspräche, sondern bevorzugt ein einziger gemeinsamer Kanal für alle diese TPC-Informationen im DL pro Multicastgruppe.

Diese Situation ist schematisch in Fig. 5 dargestellt, in der die Schichten RLC, RRC, PDCP und BMC im Vergleich zu Fig. 1 der Übersichtlichkeit halber fortgelassen sind, jedoch zur Verdeutlichung die Coded Composite Transport Kanäle CCTrCH (s.a. Fig. 2) eingefügt sind. Ausgehend von der NodeB wird eine Multicast-Nachricht einmalig über die MAC Schicht, einen Transport Kanal McCH sowie einen CCTrCH zur abbildenden physikalischen Schicht "Mapping Physical Layer" geschickt. Die Tatsache, daß es sich hierbei jeweils um einen eizigen McCH und einen einzigen CCTrCh handelt, ist durch die Bezeichnung #1 symbolisiert. Die "Mapping Physical Layer" überträgt die Multicast-Nachricht im Downlink über einen oder mehrere physikalische Kanäle (Anzahl n bzw. #n) zum Teilnehmergerät "Multicast UE". Diese Übertragung, die nach dem Ausführungsbeispiel der Fig. 5 über n physikalische Kanäle DL-PMcCH (s. Fig. 2 und 3) erfolgt, wird wie im Stand der Technik mittels n assoziierter physikalischer Kanäle UL-DPCCH (s. Fig. 4) im Uplink leistungsgesteuert bzw. -geregelt. Erfindungsgemäß werden nun diese n Kanäle DL-DPCCH über einen gemeinsamen assoziierten physikalischen Kanal DL-PMcPCH mit Hilfe von TPC-Bits leistungsangepaßt. Hierbei erkennt die Netzwerkkontrolleinheit, d.h. der betreffende NodeB in der entsprechenden Mobilfunkzelle, daß die TPC-Bits, die über den Kanal UL-DPCCH übertragen werden, mit unnötig hoher oder zu schwacher Leistung gesendet werden und erzeugt daraus mit geeigneten Prozessormitteln die in den TPC-Bits abzulegende Information "Leistungserhöhung" oder "Leistungssenkung", die dann bevorzugt in einem einzigen DL-Burst - oder auch bei Bedarf mehreren DL-Bursts - des erfindungsgemäßen Kanals DL-PMcPCH versendet werden.

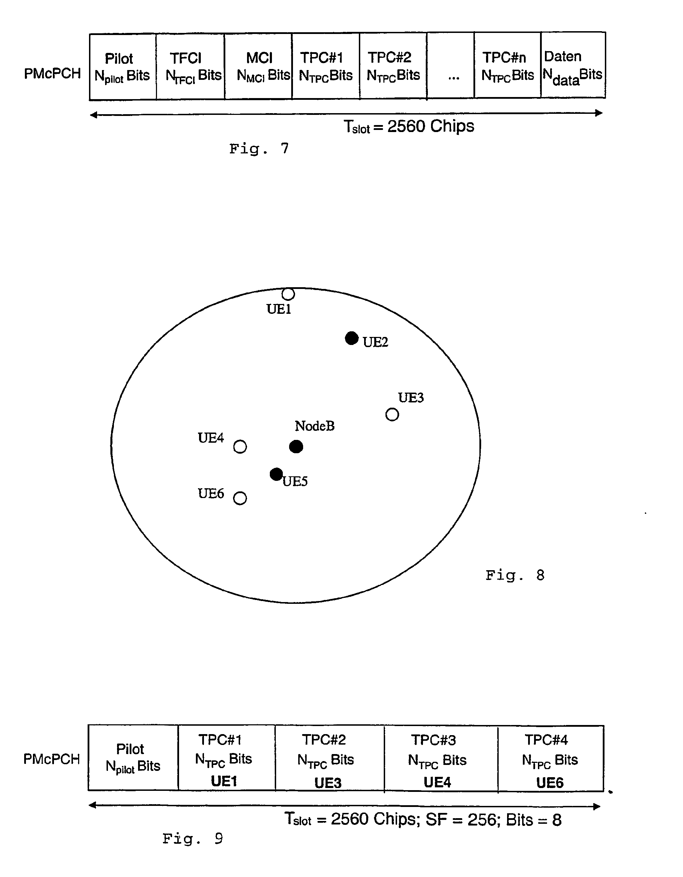

Die Anordnung der TPC-Bits kann auf verschiedene Weise realisiert werden. Zwei Beispiele für den Aufbau dieses im folgenden PMcPCH (Physical-Multicast-Power-Channels) genannten Kanals zur Übertragung der Leistungsanpassungs-Informationen in Bursts sind in den Fig. 6 und 7 dargestellt.

In Fig. 6 ist eine erste erfindungsgemäße Variante eines Burstaufbaus des physikalischen Multicast-Power-Channel PMcPCH für die Übertragung mehrerer TPC-Bits in einem Downlink-Burst (TPC-Bits) gezeigt. Bei dieser Variante sind in dem DL-Burst Pilot-Bits, die dem Empfänger zur Kanalschätzung dienen, TFCI-Bits zur Indizierung möglicher Transportkombinationen, MCI-Bits zur Identifizierung des Multicast-Services und mehrere TPC-Bits enthalten. In Fig. 7 ist eine zweite erfindungsgemäße Variante des Burstaufbaus des PMcPCH zur Übertragung mehrerer TPC-Bits in einem Downlink-Burst dargestellt. Der Unterschied bzw. die Erweiterung zu der ersten Variante gemäß der Fig. 6 besteht in einem zusätzlichen bestehenden Datenteil im PMcPCH-Burst. Dieser Datenteil kann optional zur Übertragung von Multicast-Informationen oder Multicast-Daten zu den Teilnehmergeräten der entsprechenden Multicastgruppe verwendet werden. Ansonsten gelten die Ausführungen für die Fig. 6.

Der oder die TFCI-Bits und/oder der oder die MCI-Bits sind - wie auch die Datenbits - optional.

Die Anzahl der TPC-Bits - und vorzugsweise auch der TFCI-und/oder der MCI-Bits - und auch, ob ein Datenteil vorhanden ist oder nicht, kann erfindungsgemäß durch die Wahl des Spreizungsfaktors eingestellt bzw. bestimmt werden. Ein niedriger Spreizungsfaktor, z.B. 4, bedeutet, daß 16 Bits für den Pilot-Part, 2 Bits für das TFCI-Feld, 2 Bits für den MCI-Part und insgesamt 20 Bits für TPC-Parts verwendet werden können, was bedeutet, daß diese 20 DL-TPC-Bits die UL-Kontrolle der TPC-Bits von 10 UEs sind.

Ein Beispiel für einen Ablauf der Leistungsregelung nach vorliegender Erfindung ist in Fig. 8 dargestellt. In diesem Beispiel befinden sich 6 Mobilfunkstationen in einer Mobilfunkzelle. Die Mobilfunkstationen UE1, UE3, UE4 und UE6 sind zu einer Multicastgruppe X eingeschrieben bzw. zugehörig (geweißte Kreise), UE2 und UE5 zu einer anderen Gruppe Y (geschwärzte Kreise). Für nachfolgende Ausführungen sind nur die Mobilfunkstationen der Gruppe X von Interesse. Die Multicast-Informationen für Gruppe X werden im Download mittels einem Transportkanal CCTrCH aufgrund einer z.B. großen Datenmenge auf 3 verschiedene physikalische (dedicated) Kanäle PMcCH1 - PMcCH3 gemappt (s.a. Fig. 2 und 3), die alle von den 4 Mobilfunkstationen UE1, UE3, UE4 und UE6 empfangen werden können und sollen. Die PMcCH-Kanäle enthalten vorzugsweise die TFCI-und MCI-Informationen und die Multicast-Daten. Jedem dieser UEs ist ein assoziierter UL-Kontroll-Kanal, UL-DPCCH1 - DPCCH4, zugeordnet bzw. durch den Transport Format Combination Indicator TFCI bestimmt, s.a. Fig. 4. Um eine positive Interferenzsituation in der Mobilfunkzelle aufgrund der unterschiedlichen Position der Teilnehmer der Multicastgruppe UE1, UE3, UE4 und UE6 zu sichern, werden die UL-TPC-Bits bevorzugt leistungsgeregelt. Diese Regelung erfolgt erfindungsgemäß durch einen einzigen gemeinsamen DL-PMcPCH (Common Channel). Die TFCI- und MCI-Felder werden bevorzugt entweder in den n PMcCH oder dem PMcPCH angegeben und gelten Frame-by-Frame (ein Frame besteht aus 15 Bursts/Slots).

Den Multicast-Teilnehmergeräten ist geeigneterweise durch Vorab-Signalisierung einer Multicast-Datenübertragung bekannt, welche TPC-Bits für welches Teilnehmergerät bestimmt sind. Eine solche Vorab-Signalisierung erfolgt je nach Bedarf; für eine Multicast-Gruppe mit definierten Teilnehmergeräten ist nur eine einmalige Vorab-Signalisierung notwendig.

In Fig. 9 ist ein Beispiel für eine solche durch Vorab-Signalisierung festgelegte Zuordnung gezeigt, die auf das in Fig. 8 gezeigte Beispiel Bezug nimmt. Die Abkürzung "SF" bezeichnet hierbei den Spreizungsfaktor (Spreading Factor). Im vorliegenden Beispiel könnte z.B. UE1 aufgrund einer angenommenen fehlenden Sichtverbindung zur NodeB die Multicastinformationen nicht ordnungsgemäß empfangen, so daß für UE1 eine Erhöhung der Sendeleistung der TPC-Bits im UL erfolgen muß. In diesem Fall enthalten die TPC#1-Bits im DL, d.h. die ersten Bits im Anschluß an die Nₚᵢₗₒₜ Bits, das Kommando "Power_Up". Dagegen könnte z.B. für UE4 und UE6 jeweils eine Erniedrigung der Sendeleistung ihrer TPC-Bits im UL mittels der TPC-Bits im DL auf dem PMcPCH geboten sein, weil diese Mobilfunkstationen sich beispielsweise sehr nahe an der NodeB befinden und direkte Sichtverbindung haben, s. Fig. 8. Das jeweilige Kommando wäre dann "Power_Down" in TPC#3 und TPC#4 im DL-Burst. Für UE3 könnte wiederum der Befehl "Power_Up" im TPC-Bit#2 des DL vorliegen, weil beispielsweise keine direkte Sichtverbindung zur NodeB besteht, sondern angenommenermaßen eine Verdeckung durch z.B. ein Gebäude. Somit können die TPC-Bits im UL schlecht von der NodeB empfangen werden. Die Regeln zur Bestimmung der Erhöhung oder Erniedrigung der Sendeleistung der TPC-Bits im UL werden für diese Mobilfunkzelle bevorzugt vom Netz in z.B. der Initialisierungsroutine aufgrund eines Schwellwertes festgelegt.

Die Erfindung bezieht sich sowohl auf die entsprechenden Verfahren und Vorrichtungen auf der Netzwerkseite wie auf der Teilnehmergeräteseite. Unter den Begriff Teilnehmergerät fallen insbesondere nicht nur Mobilfunktelefone, sondern auch Systeme, bei denen beispielsweise ein an ein Mobilfunktelefon angeschlossenes Notebook oder ein Laptop erfindungsgemäße Funktionen übernimmt. Zudem sind die zur Durchführung der Verfahren notwendigen Softwareprogramme Teil der vorliegenden Erfindung.

### Verwendete Abkürzungen:

- CDMA: Code Division Multiple Access
- DCH: Dedicated Channel
- DL: DownLink: Übertragungsrichtung von der NodeB zu den Ues
- DSCH: Downlink Shared Channel
- FDD: Frequency Division Duplex
- MAC: Medium Access Control
- McCH: Multicast Channel
- MCI: Multicast-Indicator
- NodeB: Basisstation in UMTS
- PMcCH: Physical Multicast Channel
- RLC: Radio Link Control
- RNC: Radio Network Controller
- TDD: Time Division Duplex
- TFCI: Transport Format Combination Indicator
- TPC: Transmit Power Control
- UE: User Equipment <-> Mobilfunkendgerät
- UL: UpLink: Übertragungsrichtung von den UEs zur NodeB
- UMTS: Universal Mobile Telecommunications System

## Patentansprüche

1. Verfahren zum Einsatz bei Netzwerkkontrolleinheiten zur Leistungsanpassung bei der Übertragung von Multicast-Nachrichten über die Luftschnittstelle eines Mobilfunksystems in UMTS, wobei eine Multicast-Nachricht in Downlink-Richtung von einer Netzwerkkontrolleinheit (NodeB) über mindestens einen Funkkanal (DL-PMcCH) an die Teilnehmergeräte (Multicast UE) einer Multicast-Gruppe übertragen wird, und wobei die Sendeleistung dieser mindestens einen Übertragung mittels Informationen angepaßt wird, die in Uplink-Richtung von den Teilnehmergeräten zur Netzwerkkontrolleinheit über assoziierte Funkkanäle (UL-DPCCH) übertragen und von der Netzwerkkontrolleinheit zur Anpassung der Sendeleistung verarbeitet werden,
**dadurch gekennzeichnet,**
**daß** über mindestens einen dedizierten mehreren der Teilnehmergeräte der Multicast-Gruppe zugeordneten assoziierten gemeinsamen Funkkanal (DL-PMcPCH) von der Netzwerkkontrolleinheit zu den Teilnehmergeräten Informationen in Downlink-Richtung übertragen werden, die die empfangenden Teilnehmergeräte zur Leistungsanpassung der jeweiligen assoziierten Funkkanäle (UL-DPCCH) in Uplink-Richtung verarbeiten.

2. Verfahren nach Anspruch 1,
**dadurch gekennzeichnet,**
**daß** ein einziger gemeinsamer assoziierter Funkkanal (DL-PMcPCH) pro Multicast-Gruppe zur besagten Leistungsanpassung der jeweiligen assoziierten Funkkanäle (UL-DPCCH) verwendet wird.

3. Verfahren nach Anspruch 1 oder 2,
**dadurch gekennzeichnet,**
**daß** die Informationen zur besagten Leistungsanpassung der jeweiligen assoziierten Funkkanäle (UL-DPCCH) in Uplink-Richtung in mindestens einem DL-Burst, PMCPCH-Burst, übertragen werden.

4. Verfahren nach Anspruch 3,
**dadurch gekennzeichnet,**
**dass** die Informationen zur Leistungsanpassung TPC-Bits, Transmit Power Control-Bits, umfassen, insbesondere die Information betreff einer Leistungserhöhung oder einer Leistungserniedrigung.

5. Verfahren nach Anspruch 4,
**dadurch gekennzeichnet,**
**dass** die Anzahl der TPC-Bits in dem mindestens einen Burst, PMcPCH-Burst, mittels eines Spreizungsfaktors bestimmt wird.

6. Verfahren nach einem der Ansprüche 3, 4 oder 5,
**dadurch gekennzeichnet,**
**dass** in dem mindestens einen Burst, PMcPCH-Burst, zusätzlich ein Datenteil vorhanden ist.

7. Verfahren nach einem der Ansprüche 3 bis 6,
**dadurch gekennzeichnet,**
**dass** mittels eines Spreizungsfaktors bestimmt wird, ob ein Datenteil in dem mindestens einen Burst, PMcPCH-Burst, vorhanden ist.

8. Verfahren nach einem der Ansprüche 3 bis 7,
**dadurch gekennzeichnet,**
**dass** in dem mindestens einen Burst, PMcPCH-Burst, zusätzlich mindestens ein TFCI-Bit, Transport Format Combination Indicator-Bit, vorhanden ist.

9. Verfahren nach einem der Ansprüche 3 bis 8,
**dadurch gekennzeichnet,**
**dass** in dem mindestens einen Burst (PMcPCH-Burst) zusätzlich mindestens ein MCI-Bit, Multicast-Indicator-Bit, vorhanden ist.

10. Verfahren nach einem der Ansprüche 4 bis 9,
**dadurch gekennzeichnet,**
**dass** die Teilnehmergeräte vor der Leistungsanpassung benachrichtigt werden, welche TPC-Bits für welches Teilnehmergerät bestimmt sind.

11. Verfahren nach einem der vorhergehenden Ansprüche,
**dadurch gekennzeichnet,**
**daß** die Regeln zur Bestimmung der Erhöhung oder Erniedrigung der Sendeleistung der jeweiligen assoziierten Funkkanäle (UL-DPCCH) in Uplink-Richtung aufgrund eines Schwellwertes vom Netz für die betreffende Mobilfunkzelle festgelegt werden.

12. Verfahren nach Anspruch 11,
**dadurch gekennzeichnet,**
**daß** die Regeln in einer Initialisierungsroutine festgelegt werden.

13. Netzwerkkontrolleinheit (im UMTS), insbesondere Basisstation (NodeB), zur Durchführung des Verfahrens nach einem der vorhergehenden Ansprüche, mit Mitteln zum Übertragen einer Multicast-Nachricht in Downlink-Richtung über mindestens einen Funkkanal (DL-PMcCH) an die Teilnehmergeräte (Multicast UE) einer Multicast-Gruppe, wobei die Sendeleistung dieser mindestens einen Übertragung von der Netzwerkkontrolleinheit mittels Informationen angepaßt wird, die in Uplink-Richtung von den Teilnehmergeräten zur Netzwerkkontrolleinheit über assoziierte Funkkanäle (UL-DPCCH) übertragen und dort zur Leistungsanpassung verarbeitet werden,
**gekennzeichnet durch**
Mittel zum Erzeugen und Übertragen von Informationen über mindestens einen dedizierten mehreren der Teilnehmergeräte der Multicast-Gruppe zugeordneten assoziierten gemeinsamen Funkkanal (DL-PMcPCH) in Downlink-Richtung von der Netzwerkkontrolleinheit zu den Teilnehmergeräten, wobei die Informationen in den empfangenden Teilnehmergeräten zur Leistungsanpassung der jeweiligen assoziierten Funkkanäle (UL-DPCCH) in Uplink-Richtung verarbeitet werden.

14. Verfahren zum Einsatz bei Teilnehmergeräten einer Multicast-Gruppe eines Mobilfunksystems in UMTS, wobei ein solches Teilnehmergerät Informationen in Uplink-Richtung über einen Funkkanal (UL-DPCCH) zu einer Netzwerkkontrolleinheit (NodeB) überträgt, wobei die Netzwerkkontrolleinheit diese Informationen zur Leistungsanpassung mindestens eines Funkkanals (DL-PMcCH) in Downlink-Richtung verwendet, über den die Netzwerkkontrolleinheit eine Multicast-Nachricht versendet,
**dadurch gekennzeichnet,**
**daß** das Teilnehmergerät von der Netzwerkkontrolleinheit in Downlink-Richtung Informationen über einen dedizierten mehreren Teilnehmergeräten der Multicast-Gruppe zugeordneten assoziierten gemeinsamen Funkkanal (DL-PMcPCH) empfängt, wobei das Teilnehmergerät diese Informationen zur Leistungsanpassung des besagten Funkkanals (UL-DPCCH) in Uplink-Richtung verarbeitet.

15. Teilnehmergerät zur Verwendung in einem Mobilfunksystem in UMTS, zur Durchführung des Verfahrens nach Anspruch 14, mit Mitteln zum Empfang einer Multicast-Nachricht von einer Netzwerkkontrolleinheit (NodeB) über mindestens einen Funkkanal (DL-PMcCH) in Downlink-Richtung, sowie Mitteln zum Erstellen und Versenden von Informationen über einen Funkkanal (UL-DPCCH) in Uplink-Richtung zu der Netzwerkkontrolleinheit zur Leistungsanpassung des besagten Funkkanals (DL-PMcCH),
**gekennzeichnet durch**
Mittel zum Empfang von Informationen von der Netzwerkkontrolleinheit in Downlink-Richtung über einen dedizierten mehreren Teilnehmergeräten der Multicast-Gruppe zugeordneten assoziierten gemeinsamen Funkkanal (DL-PMcPCH) sowie Mitteln zum Verarbeiten dieser Informationen zur Leistungsanpassung des besagten Funkkanals (UL-DPCCH) in Uplink-Richtung.

16. **Computerprogrammprodukt**, welches in eine Vorrichtung mit einem Prozessor einer Netzwerkkontrolleinheit (NodeB) gemäß Anspruch 13 oder einem Teilnehmergerät (Multicast UE) gemäß Anspruch 15, ladbar ist, so dass die derart programmierte Vorrichtung einschließlich des Prozessors fähig oder angepasst ist, die dieser Vorrichtung zugeordneten Verfahrensschritte gemäß einem der Ansprüche 1 bis 12 bzw. Anspruch 14 auszuführen.

## Claims

1. Method for use with network control units for power adjustment during transmission of multicast messages via the air interface of a mobile radio system in UMTS, whereby a multicast message is transmitted in the downlink direction from a network control unit (NodeB) over at least one radio channel (DL-PMcCH) to the subscriber devices (Multicast UE) of a multicast group, and whereby the transmission power of this at least one transmission is adjusted by means of information which is transmitted in the uplink direction from the subscriber devices to the network control unit over associated radio channels (UL-DPCCH) and processed by the network control unit in order to adjust the transmission power,
**characterised in that**
information is transmitted in the downlink direction over at least one dedicated associated common radio channel (DL-PMcPCH) assigned to several of the subscriber devices of the multicast group from the network control unit to the subscriber devices, said information being processed by the receiving subscriber devices for the purpose of power adjustment of the respective associated radio channels (UL-DPCCH) in the uplink direction.

2. Method according to claim 1,
**characterised in that**
a single common associated radio channel (DL-PMcPCH) is used per multicast group for the said power adjustment of the respective associated radio channels (UL-DPCCH).

3. Method according to claim 1 or 2,
**characterised in that**
the information for the said power adjustment of the respective associated radio channels (UL-DPCCH) is transmitted in the uplink direction in at least one DL burst, PMcPCH burst.

4. Method according to claim 3,
**characterised in that**
the information for power adjustment comprises TPC bits, Transmit Power Control bits, in particular the information concerning a power increase or a power decrease.

5. Method according to claim 4,
**characterised in that**
the number of TPC bits in the at least one burst, PMcPCH burst, is determined by means of a spreading factor.

6. Method according to one of claims 3, 4 or 5,
**characterised in that**
a data part is present in addition in the at least one burst, PMcPCH burst.

7. Method according to one of claims 3 to 6,
**characterised in that**
it is determined by means of a spreading factor whether a data part is present in the at least one burst, PMcPCH burst.

8. Method according to one of claims 3 to 7,
**characterised in that**
at least one TFCI bit, Transport Format Combination Indicator bit, is present in addition in the at least one burst, PMcPCH burst.

9. Method according to one of claims 3 to 8,
**characterised in that**
at least one MCI bit, Multicast Indicator bit, is present in addition to the at least one burst, PMcPCH burst.

10. Method according to one of claims 4 to 9,
**characterised in that**
prior to the power adjustment the subscriber devices are notified of which TPC bits are intended for which subscriber device.

11. Method according to one of the preceding claims,
**characterised in that**
the rules for determining the increase or decrease in the transmission power of the respective associated radio channels (UL-DPCCH) in the uplink direction are specified by the network on the basis of a threshold value for the mobile radio cell in question.

12. Method according to claim 11,
**characterised in that**
the rules are specified in an initialization routine.

13. Network control unit in UMTS, in particular base station (NodeB), for implementing the method according to one of the preceding claims, having means for transmitting a multicast message in the downlink direction over at least one radio channel (DL-PMcCH) to the subscriber devices (Multicast UE) of a multicast group, whereby the transmission power of this at least one transmission is adjusted by the network control unit by means of information which is transmitted in the uplink direction from the subscriber devices to the network control unit over associated radio channels (UL-DPCCH) and processed there for the purpose of power adjustment,
**characterised by**
means for generating and transmitting information over at least one dedicated associated common radio channel (DL-PMcPCH) assigned to several of the subscriber devices of the multicast group in the downlink direction from the network control unit to the subscriber devices, whereby the information is processed in the receiving subscriber devices for the purpose of power adjustment of the respective associated radio channels (UL-DPCCH) in the uplink direction.

14. Method for use with subscriber devices of a multicast group of a mobile radio system in UMTS, whereby such a subscriber device transmits information in the uplink direction over a radio channel (UL-DPCCH) to a network control unit (NodeB), whereby the network control unit uses this information for power adjustment of at least one radio channel (DL-PMcCH) in the downlink direction over which the network control unit sends a multicast message,
**characterised in that**
the subscriber device receives information from the network control unit in the downlink direction over one dedicated associated common radio channel (DL-PMcPCH) assigned to several subscriber devices of the multicast group, whereby the subscriber device processes this information for the purpose of power adjustment of the said radio channel (UL-DPCCH) in the uplink direction.

15. Subscriber device for use in a mobile radio system in UMTS, for implementing the method according to claim 14, having means for receiving a multicast message from a network control unit (NodeB) over at least one radio channel (DL-PMcCH) in the downlink direction, as well as means for generating and sending information over a radio channel (UL-DPCCH) in the uplink direction to the network control unit for the purpose of power adjustment of the said radio channel (DL-PMcCH),
**characterised by**
means for receiving information from the network control unit in the downlink direction over a dedicated associated common radio channel (DL-PMcPCH) assigned to several subscriber devices of the multicast group as well as means for processing this information for the purpose of power adjustment of the said radio channel (UL-DPCCH) in the uplink direction.

16. Computer program product which can be loaded into a device having a processor of a network control unit (NodeB) according to claim 13 or a subscriber device (Multicast UE) according to claim 15 such that the device programmed in this way including the processor has the capability or is adapted to execute the method steps assigned to this device according to one of claims 1 to 12 or claim 14.

## Revendications

1. Procédé à utiliser sur des unités de contrôle de réseau pour l'adaptation de puissance lors de la transmission de message de multidiffusion par l'interface radio d'un système de téléphonie mobile dans UMTS, un message de multidiffusion étant transmis dans la direction de liaison descendante par une unité de contrôle de réseau (NodeB) via au moins un canal radio (DL-PMcCH) aux appareils d'abonnés multidiffusion UE d'un groupe de multidiffusion, et la puissance d'émission étant adaptée à l'au moins une transmission au moyen d'informations qui sont transmises dans la direction de la liaison ascendante par des appareils d'abonnés à l'unité de contrôle de réseau via des canaux radio (UL-DPCCH) associés et sont traitées par l'unité de contrôle de réseau pour l'adaptation de la puissance d'émission,
**caractérisé en ce que**
des informations sont transmises dans la direction de la liaison descendante par l'unité de contrôle de réseau aux appareils d'abonnés via au moins un canal radio (DL-PMcPCH) commun, associé, dédié et attribué à plusieurs des appareils d'abonnés du groupe de multidiffusion, lesquelles informations sont traitées par les appareils d'abonnés récepteurs pour l'adaptation de la puissance des canaux radio (UL-DPCCH) associés respectifs dans la liaison de la direction montante.

2. Procédé selon la revendication 1,
**caractérisé en ce qu'**un unique canal radio (DL-PMcPCH) associé commun est utilisé par groupe de multidiffusion pour ladite adaptation de puissance des canaux radio (UL-DPCCH) associés respectifs.

3. Procédé selon la revendication 1 ou 2,
**caractérisé en ce que**
les informations pour ladite adaptation de puissance des canaux radio (UL-DPCCH) associés respectifs sont transmises dans la direction de la liaison montante dans au moins un DL-Burst, PMcPCH-Burst.

4. Procédé selon la revendication 3,
**caractérisé en ce que**
les informations concernant l'adaptation de puissance comportent des TPC-Bits, Transmit Power Control-Bits, en particulier l'information concernant une élévation de puissance ou un abaissement de puissance.

5. Procédé selon la revendication 4,
**caractérisé en ce que**
le nombre des TPC-Bits dans le au moins un Burst, PMcPCH-Burst, est déterminé au moyen d'un facteur d'étalement.

6. Procédé selon l'une quelconque des revendications 3, 4 ou 5,
**caractérisé en ce que**
une partie des données est présente en supplément dans le au moins un Burst, PMcPCH-Burst.

7. Procédé selon l'une quelconque des revendications 3 à 6,
**caractérisé en ce que**
on détermine au moyen d'un facteur d'étalement si une partie des données est présente dans le au moins un Burst, PMcPCH-Burst.

8. Procédé selon l'une quelconque des revendications 3 à 7,
**caractérisé en ce que**
au moins un TFCI-Bit, Transport Format Combination Indicator-Bit, est présent en supplément dans le au moins un Burst, PMcPCH-Burst.

9. Procédé selon l'une quelconque des revendications 3 à 8,
**caractérisé en ce que**
un MCI-Bit, Multicast-Indicator-Bit, est présent en supplément dans le au moins un Burst (PMcPCH-Burst).

10. Procédé selon l'une quelconque des revendications 4 à 9,
**caractérisé en ce que**
les appareils d'abonnés sont informés avant l'adaptation de la puissance pour savoir quels TPC-Bits sont définis et pour quel appareil d'abonné ils sont définis.

11. Procédé selon l'une quelconque des revendications précédentes,
**caractérisé en ce que**
les règles pour déterminer l'élévation ou l'abaissement de la puissance d'émission des canaux radio (UL-DPCCH) associés respectifs dans la direction de la liaison montante sont définies sur la base d'une valeur seuil par le réseau pour la cellule de téléphonie mobile concernée.

12. Procédé selon la revendication 11,
**caractérisé en ce que**
les règles sont définies dans une routine d'initialisation.

13. Unité de contrôle de réseau (dans l'UMTS), en particulier station de base (NodeB) pour la mise en oeuvre du procédé selon l'une quelconque des revendications précédentes, avec des moyens pour la transmission d'un message de multidiffusion dans la direction de la liaison descendante via au moins un canal radio (DL-PMcCH) aux appareils d'abonnés (multidiffusion UE) d'un groupe de multidiffusion, la puissance d'émission de cette au moins une transmission étant adaptée par l'unité de contrôle de réseau au moyen d'informations qui sont transmises dans la direction de liaison montante par les appareils d'abonnés à l'unité de contrôle de réseau via des canaux radio (UL-DPCCH) associés et sont traitées ici pour l'adaptation de puissance,
**caractérisé par**
des moyens pour générer et transmettre des informations au moyen d'au moins un canal radio (DL-PMcPCH) commun, associé, dédié et attribué à plusieurs des appareils d'abonnés du groupe de multidiffusion dans la direction de la liaison descendante de l'unité de contrôle de réseau aux appareils d'abonnés, les informations étant traitées dans les appareils d'abonnés récepteurs pour l'adaptation de la puissance des canaux radio (UL-DPCCH) associés respectifs dans la direction de la liaison montante.

14. Procédé à utiliser dans le cas d'appareils d'abonnés d'un groupe de multidiffusion d'un système de téléphonie mobile dans UMTS, un tel appareil d'abonné transmettant des informations dans la direction de la liaison montante via un canal radio (UL-DPCCH) à une unité de contrôle de réseau (NodeB), l'unité de contrôle de réseau utilisant ces informations pour l'adaptation de la puissance d'au moins un canal radio (DL-PMcCH) dans la direction de la liaison descendante, par lequel l'unité de contrôle de réseau envoie un message de multidiffusion,
**caractérisé en ce que**
l'appareil d'abonné reçoit de l'unité de contrôle de réseau dans la direction de la liaison descendante des informations via un canal radio (DL-PMcPCH) commun, associé, dédié et attribué à plusieurs appareils d'abonnés du groupe de multidiffusion, l'appareil d'abonné traitant ces informations pour l'adaptation de puissance dudit canal radio (UL-DPCCH) dans la direction de la liaison montante.

15. Appareil d'abonné pour une utilisation dans un système de téléphonie mobile dans l'UMTS pour la mise en oeuvre du procédé selon la revendication 14, comprenant des moyens pour la réception d'un message de multidiffusion d'une unité de contrôle de réseau (NodeB) via au moins un canal radio (DL-PMcCH) dans la direction de la liaison descendante, ainsi que des moyens pour l'élaboration et l'envoi d'informations via un canal radio (UL-DPCCH) dans la direction de la liaison montante à l'unité de contrôle de réseau pour l'adaptation de puissance dudit canal radio (DL-PMcCH),
**caractérisé en ce que**
les moyens pour la réception d'informations de l'unité de contrôle de réseau dans la direction de la liaison descendante via un canal radio (DL-PMcPCH) commun, associé, dédié, attribué à plusieurs appareils d'abonnés du groupe de multidiffusion ainsi que des moyens pour le traitement de ces informations pour l'adaptation de la puissance dudit canal radio (UL-DPCCH) dans la direction de la liaison montante.

16. Produit de programme informatique, qui peut être chargé dans un dispositif avec un processeur d'une unité de contrôle de réseau (NodeB) selon la revendication 13 ou un appareil d'abonné (multidiffusion UE) selon la revendication 15, de sorte que le dispositif est programmé de cette façon, y compris le processeur, est apte ou adapté pour mettre en oeuvre les étapes du procédé attribuées à ce dispositif selon l'une quelconque des revendications 1 à 12 ou la revendication 14.
